# EUROPEAN PATENT SPECIFICATION

(11) **EP 4 442 489 B1**
(45) Date of publication and mention of the grant of the patent: **24.06.2026**
(21) Application number: 22900333.0
(22) Date of filing: 23.11.2022
(51) Int. Cl.: B60L 1/00, B60L 53/30

(54) **CHARGING AND DISCHARGING CONTROL SYSTEM**
LADE- UND ENTLADESTEUERUNGSSYSTEM
SYSTÈME DE COMMANDE DE CHARGE ET DE DÉCHARGE

(30) Priority: 30.11.2021 CN 202122966236 U
(43) Date of publication of application: 09.10.2024
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2022/133664
(87) International publication number: WO 2023/098528

(56) References cited:
- WO-A1-2009/012038
- CN-A- 108 128 176
- CN-A- 108 128 176
- CN-A- 111 890 962
- CN-A- 113 022 341
- CN-A- 113 022 341
- CN-U- 209 200 741
- CN-U- 209 650 068
- CN-U- 210 027 069
- CN-U- 216 684 106
- KR-A- 20160 109 410
- US-A1- 2020 130 521

## Description

The present disclosure claims priority to Chinese Patent Application No. 202122966236.9, entitled " CHARGING AND DISCHARGING CONTROL SYSTEM", and filed on November 30, 2021.

### TECHNICAL FIELD

The present disclosure relates to the technical field of new-energy electric automobile, and in particular to a charging and discharging control system.

### BACKGROUND

With the rapid development of the automobile industry and the increasing awareness of environmental protection among people, the development of the new-energy automobile industry has become a key point in addressing the shortage of petroleum resources and reducing atmospheric pollution. Charging piles equipped are also a type of necessary device.

Charging piles may be mounted in charging stations of public buildings (for example, public premises, shopping malls, and public parking lots) and charging stations of residential community parking lots, and they can charge various models of electric automobiles based on different voltage levels. Of the charging piles, an input terminal is directly connected to alternating current power grid, and an output terminal is equipped with a charging plug for charging an electric automobile. In case of emergencies such as power grid shortage or power grid breakdown, existing charging piles are unable to operate. A massive number of electric automobiles, which serve a type of mobile distributed energy storage devices, store a significant amount of electrical energy. Therefore, how to effectively utilize the electrical energy of idle electric automobiles is the problem that needs to be addressed at present. A charging and discharging control circuit for an electric vehicle and an electric vehicle charging and discharging connection device are known from the prior art, for example from CN108128176A. An integrated charging and discharging gun and its control method are known from the prior art, for example from CN113022341A.

### SUMMARY

The present invention is defined by the independent claims. Further embodiments are set forth in the dependent claims. Any references to inventions or embodiments not falling within the scope of the independent claims are to be interpreted as examples useful for understanding the invention. To resolve the foregoing technical problem, the present disclosure provides a charging and discharging control system, including:
a charging control box, which includes a control module, a communication module, a charging port, a discharging port, and a first controllable switch circuit, and the first controllable switch circuit is configured to achieve switching between the charging port and the discharging port, the charging port is used to be connected to a power grid, the discharging port is used to be connected to an external electrical device, and the communication module is configured to achieve communication connection between the control module and an electric automobile; and
a charging gun, which includes a charging resistor, a discharging resistor, and a second controllable switch circuit, and the second controllable switch circuit is configured to achieve switching between the charging resistor and the discharging resistor;
and the control module is signal-connected to the first controllable switch circuit, the second controllable switch circuit, and the communication module, and the control module is configured to, in a state where the charging port is connected to the power grid and based on battery status information of the electric automobile,
control the first controllable switch circuit to switch to be connected to the charging port, and control the second controllable switch circuit to switch to be connected to the charging resistor, so that a charging loop is formed to enable the charging gun to output an alternating voltage or alternating current being matched with a battery of the electric automobile.

The charging and discharging control system provided by the present disclosure can charge the electric automobile and also allows the electric automobile to supply power to an electric device, meeting the charging and discharging requirements for the electric automobile in different scenarios.

To make the above and other objectives, features, and advantages of the present disclosure more comprehensible, exemplary embodiments are described below in detail with drawings.

### BRIEF DESCRIPTION OF THE DRAWINGS

To describe the technical solutions in the embodiments of the present disclosure or in the prior art more clearly, the drawings to be used in the description of the embodiments or the prior art will be briefly described below. Obviously, the drawings in the following description merely show some embodiments of the present disclosure, and a person of ordinary skill in the art may still derive other drawings from these drawings without inventive efforts.
FIG. 1 shows a charging and discharging control system according to Embodiment 1 of the present disclosure.
FIG. 2 shows a charging and discharging control system according to Embodiment 2 of the present disclosure, not forming part of the claimed invention but represents background art that is useful for understanding the invention.

### DESCRIPTION OF THE EMBODIMENTS

The technical solutions of the embodiments of the present disclosure are clearly and completely described below with reference to the drawings of the embodiments of the present disclosure. Obviously, the described embodiments are merely some rather than all of the embodiments of the present disclosure. All other embodiments obtained by those of ordinary skill in the art based on the embodiments of the present disclosure without inventive efforts shall fall within the protection scope of the present disclosure.

It should be noted that the terms "first", "second", and the like in the present disclosure, claims, and the foregoing drawings are used to distinguish between similar objects rather than to describe a specific order or sequence. It should be understood that the data used in this way is interchangeable in appropriate circumstances so that the embodiments of the present disclosure described herein can be implemented in other orders than the order illustrated or described herein. In addition, the terms "include", "have", and any variations thereof are intended to encompass non-exclusive inclusion. For example, a process, method, apparatus, product, or device that includes a list of steps or units is not necessarily limited to those steps or units clearly listed, but may include other steps or units which are not expressly listed or inherent to such process, method, apparatus, product, or device.

### Embodiment 1

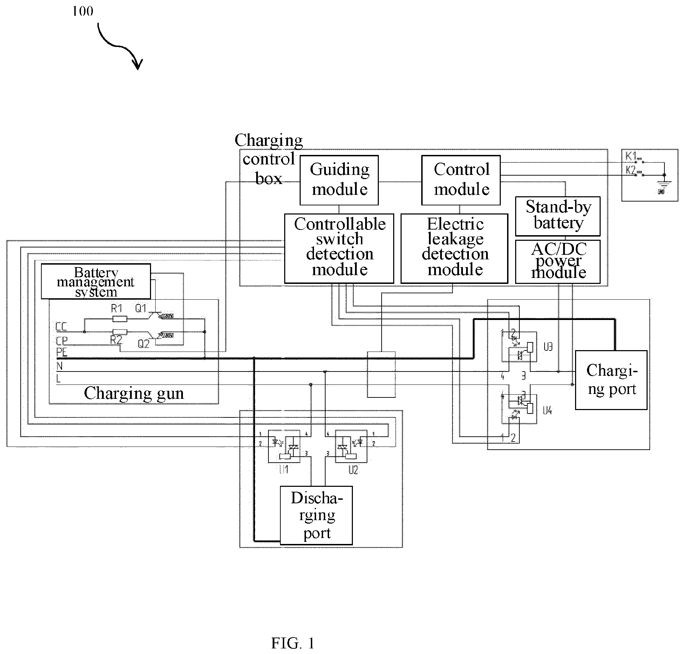

Referring to FIG. 1, this embodiment provides an exemplary alternating charging and discharging control system 100, including a charging control box and a charging gun.

Specifically, the charging control box includes a control module, a communication module (not shown in the figure), a charging port, a discharging port, and a first controllable switch circuit. The control module may be an MCU or a micro control unit. It can be understood that the communication module may be a GPRS (General Packet Radio Service) communication module, a WIFI module, or a Bluetooth module, and the GPRS communication module may be a 4G module or a 5G module. The first controllable switch circuit is configured to achieve switching between the charging port and a discharging port, the charging port is used to be connected to a power grid, the discharging port is used to be connected to an external electrical device, and the communication module is configured to achieve communication connection between the control module and an electric automobile.

The charging gun includes a charging resistor R1, a discharging resistor R2, and a second controllable switch circuit. The second controllable switch circuit is configured to achieve switching between the charging resistor R1 and the discharging resistor R2.

The control module is signal-connected to the first controllable switch circuit, the second controllable switch circuit, and the communication module, and the control module is configured to, in a state where the charging port is connected to the power grid and based on battery status information of the electric automobile,

control the first controllable switch circuit to switch to be connected to the charging port, and control the second controllable switch circuit to switch to be connected to the charging resistor R1, so that a charging loop is formed to enable the charging gun to output an alternating voltage or alternating current being matched with a battery of the electric automobile.

Further, the control module may be further configured to, in a state where the charging port is not connected to the power grid and the external electrical device is connected to the discharging port and based on the battery status information, control the first controllable switch circuit to switch to be connected to the discharging port, and control the second controllable switch circuit to switch to be connected to the discharging resistor R2, so that a discharging loop is formed to enable the charging gun to output an alternating current being matched with the power grid.

Thus, as the control module controls the first controllable switch circuit and the second controllable switch circuit, the charging and discharging control system according to this embodiment can charge the electric automobile with the alternating current power of the power grid and also allows the electric automobile to supply power to an electric device, meeting the charging and discharging requirements for the electric automobile in different scenarios.

Specifically, referring to FIG. 1, the first controllable switch circuit may include a first solid-state switch U1, a second solid-state switch U2, a third solid-state switch U3, and a fourth solid-state switch U4. Certainly, it can be understood that in this embodiment, the solid-state switch may be configured as a solid-state relay switch. In another embodiment, the solid-state switch of the first controllable switch circuit may be also replaced with a thyristor switching device and the like based on actual circuit arrangement requirements, to achieve the similar functions. This is not limited in the present disclosure.

The first solid-state switch U1 is connected between a live wire L of the charging gun and a neutral wire N of the discharging port; the second solid-state switch U2 is connected between a neutral wire N of the charging gun and a live wire L of the discharging port; the third solid-state switch U3 is connected between the neutral wire N of the charging gun and a neutral wire N of the charging port; and the fourth solid-state switch U4 is connected between the live wire L of the charging gun and a live wire L of the charging port.

More specifically, the second controllable switch circuit may include a first transistor Q1 and a second transistor Q2. A base electrode of the first transistor Q1 is configured to be connected to a battery management system of the electric automobile, a collector of the first transistor Q1 is connected to the charging resistor R1, another end of the charging resistor R1 is connected to a power supply voltage, and an emitter of the first transistor Q1 is connected to a ground wire of the charging gun; and a base electrode of the second transistor Q2 is configured to be connected to the battery management system of the electric automobile, a collector of the second transistor Q2 is connected to the discharging resistor R2, and an emitter of the second transistor Q2 is connected to the ground wire of the charging gun.

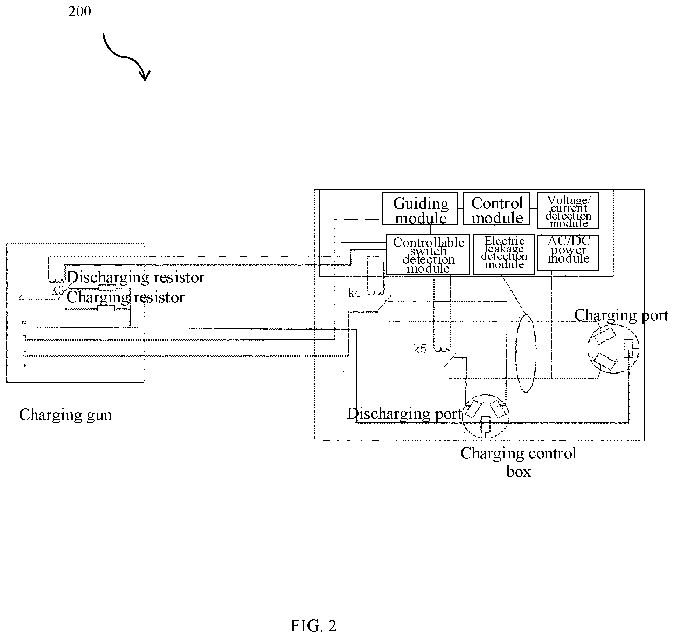

Therefore, in a state where the charging port is connected to the power grid, when the charging gun is not connected to the electric automobile, the AC (Alternating current)/DC (Direct current) power module obtains power for operation and outputs energy to a guiding module, a control module, a controllable switch detection module, an electric leakage detection module, a voltage/current detection module (referring to FIG. 2), such that each module prepares to operate.

Then, because the charging port is connected to the power grid, the control module detects that the alternating current power of the mains electricity is connected, the first transistor Q1 of the charging gun is conducted, and the charging resistor R1 is connected to a charging circuit, waiting for charging.

Before charging, the guiding module is also controlled to determine whether the electric automobile need to be charged. If it does, the electric leakage detection module is controlled to determine if there is an electric leakage abnormality. If there is no abnormality, the control module waits for the charging gun to be inserted into the electric automobile. The charging gun is connected to a charging port of the electric automobile, and the guiding module can detect the charging status and the connection status. If there is no abnormality, the guiding module notifies the control module that the charging preparation is complete and charging can begin. Then, the control module allows the controllable switch detection module to be connected to the third solid-state switch U3 and the fourth solid-state switch U4, so that a charging loop is formed to charge.

Certainly, it can be understood that if an abnormality occurs during electric leakage detection process, a prompting module can be alarmed and the control module can initiate emergency measures to prevent charging.

During discharging, because the charging port is not connected to the power grid and the charging port changes from being powered to losing power, the AC/DC power module loses power, the charging control box can be powered by the stand-by battery, the first transistor Q1 is disconnected, the second transistor Q2 is conducted, and the discharging resistor R2 is connected, waiting for discharging. It can be understood that the stand-by battery is electrically connected to the control module and used to supply power to the control module in a state where the charging port is not connected to the power grid. During charging, the AC/DC power module that has obtained power can charge the stand-by battery, and therefore in a state where the AC/DC power module loses power, it can be powered by the stand-by battery.

More specifically, before discharging, the guiding module is further controlled to determine whether the electric automobile has a discharging capability. If it does, the control module allows the controllable switch detection module to be connected to the first solid-state switch U1 and the second solid-state switch U2, so that a discharging loop is formed to discharge. After discharging to preset power, the first solid-state switch U1 and the second solid-state switch U2 can be controlled to disconnect.

Exemplarily, a charging selection button K1 and a discharging selection button K2 may be also provided outside the charging control box, the charging selection button K1 and the discharging selection button K2 are connected to the control module, and the control module is configured to control switching between the first controllable switch circuit and the second controllable switch circuit based on triggering of the charging selection button K1 or the discharging selection button K2.

It can be understood that the control module may not need to determine whether the power grid is connected to the charging port and whether the electric automobile is connected to the discharging port, and the charging mold or discharging mold may be selected by the user. This can improve the charge-discharge efficiency.

### Embodiment 2 (not forming part of the claimed invention)

Referring to FIG. 2, a charging and discharging control system 200 provided by this embodiment is different from the charging and discharging control system 100 in Embodiment 1 only in the specific configuration of the first controllable switch circuit and the second controllable switch circuit. Therefore, for brevity of description, only the different technical features are described in detail in this embodiment.

Specifically, as shown in FIG. 2, the first controllable switch circuit includes a first mechanical switch K4 and a second mechanical switch K5. A movable contact of the first mechanical switch K4 is connected to a neutral wire N of the charging gun, a normally-closed contact of the first mechanical switch K4 is connected to a neutral wire N of the discharging port, and a normally-opened contact of the first mechanical switch K4 is connected to a neutral wire N of the charging port. A movable contact of the second mechanical switch K5 is connected to a live wire L of the charging gun, a normally-closed contact of the second mechanical switch K5 is connected to a live wire L of the discharging port, and a normally-opened contact of the second mechanical switch K5 is connected to a live wire L of the charging port.

Correspondingly, the second controllable switch circuit includes a third mechanical switch K3, a movable contact of the third mechanical switch K3 is connected to a battery management system of the electric automobile, a normally-closed contact of the third mechanical switch K3 is connected to the discharging resistor R2, and a normally-opened contact of the third mechanical switch K3 is connected to the charging resistor R1.

It can be understood that the mechanical switch in this embodiment may be configured as a mechanical relay switch.

Therefore, in a state where the charging port is connected to the power grid, in this case, the charging gun is not connected to the electric automobile, the AC/DC power module obtains power for operation and provides energy to a guiding module, a control module, a controllable switch detection module, an electric leakage detection module, and a voltage/current detection module, such that each module prepares to operate.

Then, the third mechanical switch K3 switches to the charging resistor R1 at the fastest speed, and the charging resistor R1 is connected to the charging circuit, waiting for charging.

Before charging, the guiding module is also controlled to determine whether the electric automobile need to be charged. If it does, the electric leakage detection module is controlled to determine if there is an electric leakage abnormality. If there is no abnormality, the control module waits for the charging gun to be inserted into the electric automobile. The charging gun is connected to a charging port of the electric automobile, and the guiding module can detect the charging status and the connection status. If there is no abnormality, the guiding module notifies the control module that the charging preparation is complete and charging can begin. Then, the control module allows the controllable switch detection module to control the first mechanical switch K4 and the second mechanical switch K5 to be attracted. In this case, the first mechanical switch K4 and the second mechanical switch K5 are connected to the charging port, so that a charging loop is formed to charge. It can be understood that the first mechanical switch K4 and the second mechanical switch K5 are connected to the discharging port by default, and therefore, they need to be attracted for switching to a charging process.

Certainly, it can be understood that if an abnormality occurs during electric leakage detection process, a prompting module can be alarmed and the control module can initiate emergency measures to prevent charging.

During discharging, because the charging port is not connected to the power grid and the charging port changes from being powered to losing power, the AC/DC power module loses power. Therefore, the modules such as the control module do not operate, and the first mechanical switch K4, the second mechanical switch K5, and the third mechanical switch K3 are not conducted. That is, the default state is restored. In this state, the first mechanical switch K4 and the second mechanical switch K5 are connected to the discharging port, and the third mechanical switch K3 is connected to the discharging resistor R2, so that a discharging loop is formed to discharge.

More specifically, before discharging, the guiding module may be further controlled to determine whether the electric automobile has a discharging capability. If it does, discharging is performed.

It may be also understood that as long as the charging port does not obtain power, the AC/DC power module does not obtain power, the controllable switch detection module does not obtain power, the first mechanical switch K4, the second mechanical switch K5, and the third mechanical switch K3 do not attract (i.e., in the default state), the discharging port is connected to a discharging device of the electric automobile, and the electric automobile can output an alternating current of 220 V.

The charging and discharging control system of the embodiments of the present disclosure can charge the electric automobile and also allows the electric automobile to supply power to an electric device, meeting the charging and discharging requirements for the electric automobile in different scenarios.

Unless otherwise defined, technical and scientific terms used in the present disclosure have the same meaning as commonly understood by those skilled in the art of the present disclosure. The terms used in the present disclosure are merely for describing specific embodiments and not intended to limit the present disclosure. The terms such as "component" mentioned in the present disclosure may be individual parts or combinations of a plurality of parts. The terms such as "mount" and "provide" used in the present disclosure may mean a component is directly attached to another component or that a component is attached to another component through an intermediate component. In the present disclosure, the features described in one implementation can be applied separately or in combination with other features to another implementation, unless the feature is not applicable in the another implementation or there are other indications.

The present disclosure has been described through the above implementations; but it should be understood that these implementations are provided for exemplary and illustrative purposes and do not intend to limit the present disclosure in the range of the described implementations.

## Claims

1. A charging and discharging control system, comprising:
a charging control box, which comprises a control module, a communication module, a charging port, a discharging port, and a first controllable switch circuit, wherein the first controllable switch circuit is configured to achieve switching between the charging port and the discharging port, the charging port is used to be connected to a power grid, the discharging port is used to be connected to an external electrical device, and the communication module is configured to achieve communication connection between the control module and an electric automobile; and
a charging gun, which comprises a charging resistor (R1), a discharging resistor (R2), and a second controllable switch circuit, wherein the second controllable switch circuit is configured to achieve switching between the charging resistor (R1) and the discharging resistor (R2);
wherein the control module is signal-connected to the first controllable switch circuit, the second controllable switch circuit, and the communication module, and the control module is configured to, in a state where the charging port is connected to the power grid and based on battery status information of the electric automobile,
control the first controllable switch circuit to switch to be connected to the charging port and control the second controllable switch circuit to switch to be connected to the charging resistor (R1), so that a charging loop is formed to enable the charging gun to output an alternating voltage or alternating current;
the control module is further configured to, in a state where the charging port is not connected to the power grid and the external electrical device is connected to the discharging port and based on battery status information, control the first controllable switch circuit to switch to be connected to the discharging port and control the second controllable switch circuit to switch to be connected to the discharging resistor (R2), so that a discharging loop is formed to enable the charging gun to output an alternating current;
**characterized in that** the first controllable switch circuit comprises a first solid-state switch (U1), a second solid-state switch (U2), a third solid-state switch (U3), and a fourth solid-state switch (U4), wherein
the first solid-state switch (U1) is connected between a live wire (L) of the charging gun and a neutral wire (N) of the discharging port;
the second solid-state switch (U2) is connected between a neutral wire (N) of the charging gun and a live wire (L) of the discharging port;
the third solid-state switch (U3) is connected between the neutral wire (N) of the charging gun and a neutral wire (N) of the charging port; and
the fourth solid-state switch (U4) is connected between the live wire (L) of the charging gun and a live wire (L) of the charging port; and comprising
a guiding module configured to be controlled to determine whether the electric automobile need to be charged,
an electric leakage detection module configured to, if the electric automobile need to be charged, be controlled to determine if there is an electric leakage abnormality, wherein if there is no abnormality, the control module is configured to wait for the charging gun to be inserted into the electric automobile, the charging gun is connected to a charging port of the electric automobile, and the guiding module is configured to detect charging status and the connection status, if there is no abnormality, the guiding module is configured to notify the control module that a charging preparation is complete and the charging needs to begin, and
a controllable switch detection module configured to, allowed by the control module, connect to the third solid-state switch (U3) and the fourth solid-state switch (U4), so that a charging loop is formed to charge.

2. The charging and discharging control system according to claim 1, wherein the second controllable switch circuit comprises a third mechanical switch (K3), a movable contact of the third mechanical switch (K3) is connected to a battery management system of the electric automobile, a normally-closed contact of the third mechanical switch (K3) is connected to the discharging resistor (R2), and a normally-opened contact of the third mechanical switch (K3) is connected to the charging resistor (R1).

3. The charging and discharging control system according to claim 1, wherein the second controllable switch circuit comprises a first transistor (Q1) and a second transistor (Q2), wherein
a base electrode of the first transistor (Q1) is configured to be connected to a battery management system of the electric automobile, a collector of the first transistor (Q1) is connected to the charging resistor (R1), another end of the charging resistor (R1) is connected to a power supply voltage, and an emitter of the first transistor (Q1) is connected to a ground wire of the charging gun; and
a base electrode of the second transistor (Q2) is configured to be connected to the battery management system of the electric automobile, a collector of the second transistor (Q2) is connected to the discharging resistor (R2), and an emitter of the second transistor (Q2) is connected to the ground wire of the charging gun.

4. The charging and discharging control system according to claim 1, wherein the charging control box further comprises an AC/DC power module connected to an input terminal of the control module and configured to, in a state where the charging port is connected to the power grid, supply power to the control module.

5. The charging and discharging control system according to claim 1, wherein a charging selection button (K1) and a discharging selection button (K2) are also provided outside the charging control box, the charging selection button (K1) and the discharging selection button (K2) are connected to the control module, and the control module is configured to control switching between the first controllable switch circuit and the second controllable switch circuit based on triggering of the charging selection button (K1) or the discharging selection button (K2).

6. The charging and discharging control system according to claim 1, wherein the charging control box is further provided with a stand-by battery, and the stand-by battery is electrically connected to the control module and configured to supply power to the control module in a case that the charging port is not connected to the power grid.

7. The charging and discharging control system according to claim 1, wherein the communication module is any one selected from a 5G module, a 4G module, a WIFI module, and a Bluetooth module.

## Patentansprüche

1. Lade- und Entladesteuerungssystem, aufweisend:
einer Ladesteuerbox, die ein Steuermodul, ein Kommunikationsmodul, einen Ladeanschluss, einen Entladeanschluss und einen ersten steuerbaren Schalterschaltkreis aufweist, wobei der erste steuerbare Schalterschaltkreis so konfiguriert ist, dass er ein Umschalten zwischen dem Ladeanschluss und dem Entladeanschluss bewirkt, wobei der Ladeanschluss dazu dient, mit einem Stromnetz verbunden zu werden, der Entladeanschluss dazu dient, mit einem externen elektrischen Gerät verbunden zu werden, und das Kommunikationsmodul so konfiguriert ist, dass es eine Kommunikationsverbindung zwischen dem Steuermodul und einem Elektrofahrzeug herstellt; und
eine Ladepistole, die einen Ladewiderstand (R1), einen Entladewiderstand (R2) und einen zweiten steuerbaren Schalterschaltkreis aufweist, wobei der zweite steuerbare Schalterschaltkreis so konfiguriert ist, dass er ein Umschalten zwischen dem Ladewiderstand (R1) und dem Entladewiderstand (R2) bewirkt;
wobei das Steuermodul signaltechnisch mit dem ersten steuerbaren Schalterschaltkreis, dem zweiten steuerbaren Schalterschaltkreis und dem Kommunikationsmodul verbunden ist und das Steuermodul so konfiguriert ist, dass es in einem Zustand, in dem der Ladeanschluss an das Stromnetz angeschlossen ist, und auf der Grundlage von Batteriestatusinformationen des Elektrofahrzeugs
den ersten steuerbaren Schalterschaltkreis so steuert zu schalten, dass er mit dem Ladeanschluss verbunden wird, und den zweiten steuerbaren Schalterschaltkreis so steuert zu schalten, dass er mit dem Ladewiderstand (R1) verbunden wird, so dass ein Ladekreis gebildet wird, der es der Ladepistole ermöglicht, eine Wechselspannung oder einen Wechselstrom auszugeben;
das Steuermodul ferner so konfiguriert ist, dass es in einem Zustand, in dem der Ladeanschluss nicht mit dem Stromnetz verbunden ist und das externe elektrische Gerät mit dem Entladeanschluss verbunden ist, und auf der Grundlage von Batteriestatusinformationen den ersten steuerbaren Schalterschaltkreis so steuert zu schalten, dass er mit dem Entladeanschluss verbunden wird, und den zweiten steuerbaren Schalterschaltkreis so steuert zu schalten, dass er mit dem Entladewiderstand (R2) verbunden wird, sodass ein Entladungskreis gebildet wird, um es der Ladepistole zu ermöglichen, Wechselstrom auszugeben;
**dadurch gekennzeichnet, dass** der erste steuerbare Schalterschaltkreis einen ersten Halbleiterschalter (U1), einen zweiten Halbleiterschalter (U2), einen dritten Halbleiterschalter (U3) und einen vierten Halbleiterschalter (U4) aufweist, wobei
der erste Halbleiterschalter (U1) zwischen einem Phasenleiter (L) der Ladepistole und einem Neutralleiter (N) des Entladeanschlusses angeschlossen ist;
der zweite Halbleiterschalter (U2) zwischen einem Neutralleiter (N) der Ladepistole und einem Phasenleiter (L) des Entladeanschlusses geschaltet ist;
der dritte Halbleiterschalter (U3) zwischen dem Neutralleiter (N) der Ladepistole und einem Neutralleiter (N) des Ladeanschlusses geschaltet ist; und
der vierte Halbleiterschalter (U4) zwischen dem Phasenleiter (L) der Ladepistole und einem Phasenleiter (L) des Ladeanschlusses angeschlossen; und
aufweisend
ein Führungsmodul, das so konfiguriert ist, dass es gesteuert wird, um zu bestimmen, ob das Elektroauto aufgeladen werden muss,
ein Modul zur Erkennung von Stromlecks, das so konfiguriert ist, dass es, falls das Elektrofahrzeug aufgeladen werden muss, so gesteuert wird, dass es feststellt, ob eine Anomalie hinsichtlich eines Stromlecks vorliegt, wobei, falls keine Anomalie vorliegt, das Steuermodul so konfiguriert ist, dass es darauf wartet, dass die Ladepistole in das Elektrofahrzeug eingeführt wird, die Ladepistole mit einer Ladeanschlussbuchse des Elektrofahrzeugs verbunden wird und das Führungsmodul so konfiguriert ist, dass es den Ladezustand und den Verbindungszustand erfasst, falls keine Anomalie vorliegt, das Führungsmodul so konfiguriert ist, dass es dem Steuermodul mitteilt, dass die Vorbereitungen zum Laden abgeschlossen sind und der Ladevorgang beginnen muss, und
ein steuerbares Schaltererfassungsmodul, das so konfiguriert ist, dass es, mit Genehmigung des Steuermoduls, eine Verbindung zum dritten Halbleiterschalter (U3) und zum vierten Halbleiterschalter (U4) herstellt, so dass eine Ladeschleife zum Laden gebildet wird.

2. Lade- und Entladesteuerungssystem nach Anspruch 1, bei dem der zweite steuerbare Schalterschaltkreis einen dritten mechanischen Schalter (K3) aufweist, ein beweglicher Kontakt des dritten mechanischen Schalters (K3) mit einem Batteriemanagementsystem des Elektrofahrzeugs verbunden ist, ein normalerweise geschlossener Kontakt des dritten mechanischen Schalters (K3) mit dem Entladewiderstand (R2) verbunden ist und ein normalerweise offener Kontakt des dritten mechanischen Schalters (K3) mit dem Ladewiderstand (R1) verbunden ist.

3. Lade- und Entladesteuerungssystem nach Anspruch 1, bei dem der zweite steuerbare Schalterschaltkreis einen ersten Transistor (Q1) und einen zweiten Transistor (Q2) aufweist, wobei
eine Basiselektrode des ersten Transistors (Q1) so konfiguriert ist, dass sie mit einem Batteriemanagementsystem des Elektrofahrzeugs verbunden ist, ein Kollektor des ersten Transistors (Q1) mit dem Ladewiderstand (R1) verbunden ist, ein anderes Ende des Ladewiderstands (R1) mit einer Versorgungsspannung verbunden ist und ein Emitter des ersten Transistors (Q1) mit einem Erdungsleiter der Ladepistole verbunden ist; und
eine Basiselektrode des zweiten Transistors (Q2) so konfiguriert ist, dass sie mit dem Batteriemanagementsystem des Elektroautos verbunden ist, ein Kollektor des zweiten Transistors (Q2) mit dem Entladewiderstand (R2) verbunden ist und ein Emitter des zweiten Transistors (Q2) mit dem Erdungsleiter der Ladepistole verbunden ist.

4. Lade- und Entladesteuerungssystem nach Anspruch 1, bei dem die Ladesteuerbox ferner ein AC/DC-Leistungsmodul aufweist, das mit einem Eingangsanschluss des Steuermoduls verbunden und so konfiguriert ist, dass es in einem Zustand, in dem der Ladeanschluss mit dem Stromnetz verbunden ist, das Steuermodul mit Strom versorgt.

5. Lade- und Entladesteuerungssystem nach Anspruch 1, bei dem außerhalb der Ladesteuerbox zudem eine Ladeauswahltaste (K1) und eine Entladeauswahltaste (K2) vorgesehen sind, die Ladeauswahltaste (K1) und die Entladeauswahltaste (K2) mit dem Steuermodul verbunden sind und das Steuermodul so konfiguriert ist, dass es das Umschalten zwischen dem ersten steuerbaren Schalterschaltkreis und dem zweiten steuerbaren Schalterschaltkreis auf der Grundlage der Betätigung der Ladeauswahltaste (K1) oder der Entladeauswahltaste (K2) steuert.

6. Lade- und Entladesteuerungssystem nach Anspruch 1, bei dem die Ladesteuerbox ferner mit einer Standby-Batterie versehen ist und die Standby-Batterie elektrisch mit dem Steuermodul verbunden und so konfiguriert ist, dass sie das Steuermodul mit Strom versorgt, falls der Ladeanschluss nicht an das Stromnetz angeschlossen ist.

7. Lade- und Entladesteuerungssystem nach Anspruch 1, bei dem das Kommunikationsmodul eines aus einem 5G-Modul, einem 4G-Modul, einem WIFI-Modul und einem Bluetooth-Modul ist.

## Revendications

1. Système de commande de charge et de décharge, comprenant:
un boîtier de commande de charge comprenant un module de commande, un module de communication, une borne de charge, une borne de décharge et un premier circuit de commutation commandable, le premier circuit de commutation commandable étant configuré pour effectuer une commutation entre la borne de charge et la borne de décharge, la borne de charge étant destinée à être connectée à un réseau électrique, la borne de décharge servant à être connecté à un appareil électrique externe, et le module de communication étant configuré pour établir une liaison de communication entre le module de commande et un véhicule électrique; et
un pistolet de charge comprenant une résistance de charge (R1), une résistance de décharge (R2) et un deuxième circuit de commutation commandable, le deuxième circuit de commutation commandable étant configuré de manière à effectuer une commutation entre la résistance de charge (R1) et la résistance de décharge (R2);
le module de commande étant relié par des signaux au premier circuit de commutation commandable, au deuxième circuit de commutation commandable et au module de communication, et le module de commande étant configuré de manière à ce que, dans un état où la borne de charge est connectée au réseau électrique et sur la base des informations d'état de la batterie du véhicule électrique,
commute le premier circuit de commutation commandable de manière à ce qu'il soit connecté au connecteur de charge, et commute le deuxième circuit de commutation commandable de manière à ce qu'il soit connecté à la résistance de charge (R1), de sorte qu'un circuit de charge est formé, permettant au pistolet de charge de délivrer une tension alternative ou un courant alternatif;
le module de commande est en outre configuré de manière à ce que, dans un état où la borne de charge n'est pas connectée au réseau électrique et où l'appareil électrique externe est connecté à la borne de décharge, et sur la base des informations d'état de la batterie, il commande la commutation du premier circuit de commutation contrôlable de manière à ce qu'il soit connecté à la borne de décharge, et à commander le deuxième circuit de commutation contrôlable de manière à ce qu'il soit connecté à la résistance de décharge (R2), de sorte qu'un circuit de décharge soit formé pour permettre au pistolet de charge de délivrer un courant alternatif;
**caractérisé en ce que** le premier circuit de commutation commandable comprend un premier commutateur à semi-conducteur (U1), un deuxième commutateur à semi-conducteur (U2), un troisième commutateur à semi-conducteur (U3) et un quatrième commutateur à semi-conducteur (U4), dans lequel
le premier commutateur à semi-conducteur (U1) est connecté entre un conducteur de phase (L) du pistolet de charge et un conducteur neutre (N) de la borne de décharge;
le deuxième commutateur à semi-conducteur (U2) est connecté entre un conducteur neutre (N) du pistolet de charge et un conducteur de phase (L) de la borne de décharge;
le troisième commutateur à semi-conducteur (U3) est connecté entre le conducteur neutre (N) du pistolet de charge et un conducteur neutre (N) de la borne de charge; et
le quatrième commutateur à semi-conducteurs (U4) est connecté entre le conducteur de phase (L) du pistolet de charge et un conducteur de phase (L) de la borne de charge; et
comprenant
un module de commande configuré pour être piloté de manière à déterminer si le véhicule électrique doit être chargé,
un module de détection de fuites de courant, configuré pour être commandé, si le véhicule électrique doit être chargé, de manière à déterminer s'il existe une anomalie relative à une fuite de courant, dans lequel, s'il n'y a pas d'anomalie, le module de commande est configuré pour attendre que le pistolet de charge soit inséré dans le véhicule électrique, le pistolet de charge soit connecté à une borne de charge du véhicule électrique et le module de guidage soit configuré pour détecter l'état de charge et l'état de connexion; s'il n'y a pas d'anomalie, le module de guidage est configuré pour signaler au module de commande que les préparatifs de charge sont terminés et que le processus de charge doit commencer, et
un module de détection de commutateur commandable, configuré de manière à établir, avec l'autorisation du module de commande, une connexion avec le troisième commutateur à semi-conducteur (U3) et le quatrième commutateur à semi-conducteur (U4), de sorte qu'une boucle de charge soit formée pour la charge.

2. Système de commande de charge et de décharge selon la revendication 1, dans lequel le deuxième circuit de commutation commandable comprend un troisième commutateur mécanique (K3), un contact mobile du troisième commutateur mécanique (K3) est relié à un système de gestion de batterie du véhicule électrique, un contact normalement fermé du troisième commutateur mécanique (K3) est relié à la résistance de décharge (R2) et un contact normalement ouvert du troisième commutateur mécanique (K3) est relié à la résistance de charge (R1).

3. Système de commande de charge et de décharge selon la revendication 1, dans lequel le deuxième circuit de commutation commandable comprend un premier transistor (Q1) et un deuxième transistor (Q2), dans lequel
une électrode de base du premier transistor (Q1) est configurée pour être reliée à un système de gestion de batterie du véhicule électrique, un collecteur du premier transistor (Q1) est relié à la résistance de charge (R1), une autre extrémité de la résistance de charge (R1) est reliée à une tension d'alimentation et un émetteur du premier transistor (Q1) est relié à un conducteur de mise à la terre du pistolet de charge; et
une électrode de base du deuxième transistor (Q2) est configurée de manière à être connectée au système de gestion de batterie du véhicule électrique, un collecteur du deuxième transistor (Q2) est connecté à la résistance de décharge (R2) et un émetteur du deuxième transistor (Q2) est connecté au conducteur de mise à la terre du pistolet de charge.

4. Système de commande de charge et de décharge selon la revendication 1, dans lequel le boîtier de commande de charge comprend en outre un module de puissance CA/CC qui est relié à une borne d'entrée du module de commande et qui est configuré de manière à alimenter le module de commande en courant dans un état où la borne de charge est reliée au réseau électrique.

5. Système de commande de charge et de décharge selon la revendication 1, dans lequel sont en outre prévus, à l'extérieur du boîtier de commande de charge, un bouton de sélection de charge (K1) et un bouton de sélection de décharge (K2), le bouton de sélection de charge (K1) et le bouton de sélection de décharge (K2) sont reliés au module de commande et le module de commande est configuré de manière à commander la commutation entre le premier circuit de commutation commandable et le deuxième circuit de commutation commandable sur la base de l'actionnement du bouton de sélection de charge (K1) ou du bouton de sélection de décharge (K2).

6. Système de commande de charge et de décharge selon la revendication 1, dans lequel le boîtier de commande de charge est en outre muni d'une batterie de secours, laquelle est reliée électriquement au module de commande et configurée de manière à alimenter le module de commande en courant lorsque la borne de charge n'est pas connectée au réseau électrique.

7. Système de commande de charge et de décharge selon la revendication 1, dans lequel le module de communication est choisi parmi un module 5G, un module 4G, un module Wi-Fi et un module Bluetooth.
